(19) Europäisches Patentamt / European Patent Office / Office européen des brevets

(11) **EP 1 763 915 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(51) Int Cl.:
**H02H 7/085** (2006.01) **G05B 19/21** (2006.01)

(21) Anmeldenummer: **05757368.5**

(86) Internationale Anmeldenummer:
**PCT/EP2005/007012**

(22) Anmeldetag: **29.06.2005**

(87) Internationale Veröffentlichungsnummer:
**WO 2006/002899 (12.01.2006 Gazette 2006/02)**

(54) **STEUERUNGSVORRICHTUNG UND VERFAHREN ZUR STEUERUNG EINER VERSTELLEINRICHTUNG EINES KRAFTFAHRZEUGS**

CONTROL DEVICE AND METHOD FOR CONTROLLING AN ADJUSTING UNIT OF A MOTOR VEHICLE

DISPOSITIF DE COMMANDE ET PROCEDE POUR COMMANDER UN SYSTEME DE REGLAGE D'UNE AUTOMOBILE

(84) Benannte Vertragsstaaten:
**DE FR**

(30) Priorität: **30.06.2004 DE 202004010211 U**

(43) Veröffentlichungstag der Anmeldung:
**21.03.2007 Patentblatt 2007/12**

(73) Patentinhaber: **Brose Fahrzeugteile GmbH & Co. Kommanditgesellschaft, Coburg**
**96450 Coburg (DE)**

(72) Erfinder:
 • **BUHLHELLER, Jürgen**
  **97478 Hainert (DE)**
 • **ÜBEL, Wolfgang**
  **96479 Weitramsdorf (DE)**

(74) Vertreter: **FDST Patentanwälte**
**Nordostpark 16**
**90411 Nürnberg (DE)**

(56) Entgegenhaltungen:
**DE-A1- 4 138 194      US-A- 5 963 001**
**US-A1- 2002 180 389    US-A1- 2003 122 515**

**Beschreibung**

Die Erfindung betrifft eine Steuerungsvorrichtung und ein Verfahren zur Steuerung einer Verstelleinrichtung eines Kraftfahrzeugs

Indirekt-erkennende Einklemmschutz-Systeme für Verstelleinrichtungen von Kraftfahrzeugen sind beispielsweise aus DE 30 43 118 A1, EP 0 359 853 B1, DE 43 15 637 A1 und DE 197 11 979 A1 bekannt. Diese Systeme nennt man indirekt-erkennend, weil das Erkennen des Einklemmens eines Objekts nicht unmittelbar am Ort des Geschehens erfolgt (wie beispielsweise bei Verwendung einer entlang der Schließkontur verlegten elektrischen Kontaktleiste), sondern infolge dessen Rückwirkung über die Kraftkette des Verstellsystems auf den Antrieb, der mit einem Sensor in Wirkverbindung steht. In einigen Ausführungsarten ist auf der Antriebswelle des Motors ein Ringmagnet befestigt, der in einem zugeordneten Hall-Sensor Signale generiert, die wiederum in einer elektronischen Steuerungsvorrichtung bewertet werden. Sollte ein Einklemmfall auftreten, so ist mit einer charakteristischen Verzögerung der Verstellbewegung des Verstellteils (z.B. einer Fensterscheibe) zu rechnen, die über die mechanische Kopplung auch den Antrieb abbremst. Hierdurch verlängern sich die zeitlichen Perioden zwischen zwei aufeinander folgenden (Hall-)Signalen. Bei Überschreitung eines festgelegten Grenzwertes wird der Antrieb durch die Steuerungseinrichtung gestoppt und ggf. die Drehrichtung umgekehrt, um den Einklemmzustand wieder zu lösen.

Derartige Einklemmschutz- bzw. Verletzungsschutzsysteme sind im Einsatz für Verstellkinematiken von Fensterhebern, bei denen das Übersetzungsverhältnis zwischen dem Antrieb und dem Verstellteil (Fensterscheibe) konstant bleibt. Ein Beispiel hierfür sind einsträngige oder doppelsträngige Seilfensterheber mit im wesentlichen gerade verlaufender Führungsbahn, wie diese beispielhaft in DE 198 02 478 A1 und WO 98/50658 offenbart sind. Grundsätzlich muss hier jede vom elektronischen Verletzungsschutz erkannte Veränderung in der Dynamik des Verstellprozesses oder hinsichtlich der auftretenden Kräfte einer äußeren Einwirkung zugeordnet werden und deshalb - bei Überschreitung vorgebbarer Grenzwerte - auf einen Einklemmfall geschlossen werden. Andere Einklemmschutzsysteme sind aus US 2003/122515 und US 6,548,974 bekannt.

Der Erfindung liegt die Aufgabe zu Grunde verbesserte Möglichkeiten der Steuerung einer Verstelleinrichtung eines Kraftfahrzeugs anzugeben, die die Funktionsfähigkeit der Verstelleinrichtung möglichst verbessern und Fehlfunktionen möglichst vermeiden.

Die Aufgabe wird durch die Merkmale der unabhängigen Ansprüche gelöst. Vorteilhafte Weiterbildungen der Erfindung sind in den Unteransprüchen angegeben. Zur Weiterbildung der Erfindung werden zudem die Merkmale der Unteransprüche besonders vorteilhaft untereinander als auch mit Merkmalen des angegebenen Standes der Technik kombiniert.

Demzufolge ist eine Steuerungsvorrichtung und ein Verfahren zur Steuerung einer Verstelleinrichtung eines Kraftfahrzeugs angegeben indem die Steuerung in Abhängigkeit von einer Position erfolgt, die aus einer Welligkeit eines Motorstromes (ripple count) der Verstelleinrichtung bestimmt wird. Die Welligkeit des Motorstromes ist dabei durch die mechanische Kommutierung bedingt. Eine positionsabhängige Steuerung wird beispielsweise bei einem Fensterheber realisiert, wobei die Steuerungsvorrichtung anhand der bestimmten Position unterscheiden kann, ob die Fensterscheibe in eine Dichtung der Kraftfahrzeugtür einfährt oder ob ein Körperteil eines Fahrzeuginsassens durch die Bewegung der Fensterscheibe zwischen Dichtung und Scheibenkante eingequetscht wird.

Zur Korrektur eines möglichen Positionsfehlers wird eine Referenzcharakteristik von in Reihenfolge auftretender Signale der Welligkeit einer Referenzposition zugeordnet. Unter Signale der Welligkeit sind dabei jegliche Arten von in der Welligkeit enthaltenen Informationen, wie Strom- oder Spannungswerte, zeitliche Änderungen derselben, Maxima, Minima, Wendepunkte, Zeitintervalle, Perioden oder dergleichen zu verstehen. Eine Reihenfolge von diesen auftretenden Signalen ist nicht auf ein Aufeinanderfolgen dieser Signale begrenzt, diese Signal können auch verschachtelt in definierter Reihenfolge auftreten. Diese definierte Reihenfolge der Signale bildet die Referenzcharakteristik die zu dem Elektromotor spezifisch ist. Die Zuordnung der Referenzposition zu dieser Charakteristik erfolgt vorzugsweise derart, dass eine einfache Berechnung ermöglicht wird. Hierzu wird die Referenzposition vorzugsweise dem Beginn oder dem Ende der ermittelten Referenzcharakteristik, also dem zeitlich ersten oder letzten Signal zugeordnet.

Die bestimmte Position wird in Abhängigkeit von der Referenzcharakteristik und der Referenzposition korrigiert. Zur Korrektur wird vorzugsweise der aktuelle Wert der bestimmten Position durch einen korrigierten Wert in einem Register überschrieben oder mögliche Differenzwerte addiert oder subtrahiert.

Eine bevorzugte Weiterbildung der Erfindung sieht vor, dass eine aktuelle Messcharakteristik und die Referenzcharakteristik verglichen werden. Die aktuelle Messcharakteristik wird dabei durch die aktuellen ermittelten Signale der Welligkeit bestimmt, die vorzugsweise in der in der Referenzcharakteristik festgelegten Reihenfolge auftreten. Die Korrektur erfolgt, wenn die aktuelle Messcharakteristik und die Referenzcharakteristik mittels des Vergleiches einander zugeordnet werden können. Zur Zuordnung müssen die Messcharakteristik und die Referenzcharakteristik ein Mindestmaß übereinstimmen. Der notwendige Grad der Übereinstimmung kann dabei fest vorgegeben werden. Dagegen erfolgt vorzugsweise eine Anpassung durch eine Steuerungsvorrichtung der Verstelleinrichtung in Abhängigkeit von Mess- oder Kenngrößen der Verstelleinrichtung.

Grundsätzlich stehen zum Vergleich der Messcharakteristik und der Referenzcharakteristik verschiedene mathematische Modelle zur Verfügung. In einer vorteilhaften Ausgestaltung der Erfindung werden die Messcharakteristik und die Referenzcharakteristik kreuzkorreliert. Vorzugsweise wird der Ausgangswert der Kreuzkorrelation nachfolgend mit einem Vergleichsschwellwert verglichen und im positiven Fall erfolgt die Korrektur. Demzufolge können unabhängig von der verwendeten Vergleichsfunktion in einer besonders vorteilhaften Weiterbildung der Erfindung die Messcharakteristik und die Referenzcharakteristik einander zugeordnet werden, wenn ein Wert von Übereinstimmungen zwischen der Messcharakteristik und der Referenzcharakteristik einen bestimmten Schwellwert überschreitet.

Erfindungsgemäß weiterbildend wird die Referenzcharakteristik fortlaufend aktualisiert. Mit der Aktualisierung wird die Referenzcharakteristik an sich ändernde Umgebungsbedingungen der Verstelleinrichtung angepasst. Die Aktualisierung erfolgt dabei vorzugsweise innerhalb einer Verstellbewegung mehrmals, vorteilhafterweise jedes Mal, wenn eine aktuelle Messcharakteristik der Referenzcharakteristik zugeordnet werden kann.

Vorzugsweise werden zur Aktualisierung zugeordnete Messcharakteristiken mit der Referenzcharakteristik abgeglichen. Eine Zuordnung einer Messcharakteristik zu einer möglichen Aktualisierung erfolgt dabei vorteilhafterweise immer dann, wenn eine Mindestübereinstimmung ermittelt wird.

Grundsätzlich kann die Referenzcharakteristik aus unterschiedlichen in der Welligkeit enthaltenen Informationen gebildet werden. Im folgenden werden vier Vorzugsvarianten der Erfindung angegeben, die auch untereinander kombiniert werden können.

In einer ersten Variante dieser Weiterbildung der Erfindung weist die Referenzcharakteristik eine Anzahl von Spannungswerten und/oder Stromwerten, vorzugsweise von Spitzenstromwerten der in Reihenfolge auftretenden Signale auf. Die Strom- oder Spannungswerte können beispielsweise zu bestimmten Zeiten ermittelt werden. Vorzugsweise werden jedoch die Spitzenstromwerte als Maxima des Verlaufs der Welligkeit ermittelt. Eine Reihenfolge dieser Spitzenstromwerte bildet dann die Referenzcharakteristik.

In einer zweiten Variante dieser Weiterbildung der Erfindung weist die Referenzcharakteristik eine Anzahl von Integralwerten der in Reihenfolge auftretenden Signale auf. Die Integralwerte werden vorzugsweise durch Integration von dem zeitlichen Strom- oder Spannungsverlauf der Welligkeit gebildet.

Eine dritte Variante dieser Weiterbildung der Erfindung sieht vor, dass die Referenzcharakteristik eine Anzahl von Zeitintervallen der in Reihenfolge auftretenden Signale aufweist. Die Zeitintervalle werden dabei vorzugsweise durch steigende oder fallende Flanken gebildet, die aus der Welligkeit des Signals, beispielsweise durch einen oder mehrere Schwellwertvergleiche ermittelt werden.

Eine vierte Variante dieser Weiterbildung der Erfindung sieht vor, dass die Referenzcharakteristik Verhältnisse von Spannungswerten und/oder Stromwerten und/oder Integralwerten und/oder Zeitintervallen der in Reihenfolge auftretenden Signale aufweist. Die Verhältnisse sind dabei vorzugsweise unabhängig von einer Verstärkung oder einer Dämpfung des Signals, die durch Umgebungseinflüsse bedingt sein können.

Eine besonders vorteilhafte Weiterbildung der Erfindung bewirkt, dass die bestimmte Position in Abhängigkeit von der Länge der Charakteristik korrigiert wird. Entspricht die Länge der Referenzcharakteristik beispielsweise einer vollen Motorumdrehung, so sind dieser vollen Motorumdrehung wiederum vorzugsweise eine Anzahl von in Reihenfolge auftretender Signale zuzuordnen, die vorteilhafterweise einer Zählwertdifferenz der bestimmten Position entsprechen. Die Motorumdrehung ist über die Mechanik der Verstelleinrichtung wiederum einer bestimmten Verstellwegstrecke zugeordnet.

Eine vorteilhafte Ausgestaltung dieser Weiterbildung der Erfindung ermöglicht, dass zur Korrektur die Distanz zwischen der bestimmten Position und der Referenzposition um ein Vielfaches der Länge der Charakteristik verringert wird. Aus der Definition der Länge der Referenzposition geht vorzugsweise hervor, dass die Länge der Referenzposition einem Zählwert für die bestimmte Position entspricht Beispielsweise entspricht die Länge der Referenzposition der Anzahl der Metallkontakte des Kommutators und der damit zusammenhängenden Anzahl von Zählwerten für die bestimmte Position. Um die bestimmte Position nun zu korrigieren, muss lediglich die bestimmte Position um die verbleibende Differenz verschoben werden. Die Richtung der Verschiebung wird dazu vorteilhafterweise aus dem Vorzeichen der Differenz abgeleitet.

Eine alternative Ausgestaltung der Erfindung sieht vor, dass die Korrektur nur bei positiven Ergebnis einer Plausibilitätsprüfung von zumindest der bestimmten Position, der Referenzposition und der Länge der Charakteristik erfolgt. Dies kann die Wahrscheinlichkeit von Fehlkorrekturen reduzieren.

Ein weiterer Aspekt der Erfindung ist ein Verfahren, wobei die Steuerung in Abhängigkeit von einer Position erfolgt, die aus einem von einer Motorbewegung abhängigen Sensorsignal, vorzugsweise eines Bewegungssensors der Verstelleinrichtung bestimmt wird. Dieses Sensorsignal ist dabei wiederum für den Antrieb spezifisch. Hierzu wird eine Referenzcharakteristik von in Reihenfolge auftretender Sensorsignale einer Referenzposition zugeordnet und die bestimmte Position in Abhängigkeit von der Referenzcharakteristik und der Referenzposition wiederum korrigiert.

Die Erfindung umfasst eine Steuerungsvorrichtung einer Verstelleinrichtung eines Kraftfahrzeugs, mit einem Sensor, einem Leistungstreiber und einer Recheneinheit, die spezifisch ausgestaltet und eingerichtet sind. Der Sensor ist insbesondere ein Stromsensor zur Generation eines von einer Motorbewegung eines Motors der Verstelleinrichtung abhängigen Signals. Der Leistungstreiber dient zur Steuerung eines Motorstromes. Die Recheneinheit ist entsprechend ausgebildet und eingerichtet, um die Funktionen zu erfüllen

- eine Position aus dem Sensorsignal, insbesondere der Welligkeit des Motorstromes zu bestimmen,
- eine Referenzcharakteristik von in Reihenfolge auftretender Signale des Sensors, insbesondere der Welligkeit einer Referenzposition zuzuordnen,
- die bestimmte Position in Abhängigkeit von der Referenzcharakteristik und der Referenzposition zu korrigieren und
- den Motorstrom in Abhängigkeit von der korrigierten Position zu steuern.

Eine vorteilhafte Weiterbildung der Erfindung sieht ein Differenzierglied, insbesondere einen Hochpass oder einen Bandpass vor, das ausgelegt ist den Gleichanteil des Sensorsignals auszufiltern, um insbesondere eine mit der Referenzcharakteristik zu vergleichende Messcharakteristik aus dem gefilterten Signal zu bestimmen.

Eine weitere vorteilhafte Ausgestaltung der Erfindung weist einen Analog-Digital-Umsetzer auf, wobei der Sensor mit dem Analog-Digital-Umsetzer derart verbunden ist, dass das ungefilterte Sensorsignal, insbesondere dessen Gleichanteil, von der Recheneinheit auswertbar ist.

In Kombination mit der zuvor dargestellten Korrektur der bestimmten Verstellposition wird in einer vorteilhaften Weiterbildung der Erfindung die Position aus einem Motormodell bestimmt. Dieses Motormodell ermöglicht die Bestimmung der Verstellposition und der Verstellgeschwindigkeit in Abhängigkeit von im Motormodell enthaltenen elektromechanischen Parametern. Als Eingangsgröße des Motormodells wird eine Motorkenngröße verwendet. Diese ist vorzugsweise der Motorstrom, der mittels eines Stromsensors bestimmt wird. Dabei wird vorteilhafterweise aus dem Motorstrom sowohl der Gleichanteil, als auch eine durch Kommutation bedingte Welligkeit des Motorstroms als Eingangsgröße des Motormodells ausgewertet.

In dieser vorteilhaften Weiterbildung der Erfindung wird das Ermitteln der Drehzahl und/oder des Drehwinkels bei mechanisch kommutierten Gleichstrommotoren aus dem Zeitverlauf der bei der Kommutierung auftretenden Welligkeit (Ripple) des Motorstroms durch ein parallel dazu arbeitendes Motorzustandsmodell ergänzt und kontrolliert, dem die elektromechanischen Motorengleichungen zugrunde liegen. Aus dem Motorstrom und der Motorspannung wird ein wahrscheinlicher Wert der aktuellen Drehzahl extrapoliert sowie vorzugsweise ein zulässiger Soll-Wertebereich der nächsten Kommutierung bestimmt.

Kann im Soll-Wertebereich kein Kommutierungszeitpunkt bestimmt werden, wird vorteilhafterweise der extrapolierte Wert verwendet. Anderenfalls wird aus dem im Soll-Wertebereich durch Messung der Welligkeit erfassten Kommutierungszeitpunkt die aktuelle Drehzahl genau bestimmt. Die für das Motorzustandsmodell erforderliche motorspezifische und lastabhängige Größe kann fest vorgegeben werden oder nach der Detektion von Kommutierungsvorgängen jeweils an die aktuelle Drehzahl angepasst und gelernt werden. Störungen bei der Erfassung und Auswertung der bei der Kommutierung auftretenden Welligkeit (Ripple) des Motorstroms können vermieden und die für eine Positionsermittlung und -steuerung von elektrisch betriebenen Teilen erforderliche störsichere Weiterleitung der aktuellen Werte sichergestellt werden. So werden vorzugsweise auch die durch das Motormodell berechneten Position in Abhängigkeit von der Messcharakteristik und der Referenzcharakteristik korrigiert.

So kann die Motorimpedanz bereits im Anlaufzeitpunkt noch vor dem Überwinden der Haftreibung bestimmt werden, da in diesem Fall die Drehzahl noch Null und keine induzierte Ankerspannung vorhanden ist. Durch mehrfache Erfassung von Motorstrom und Motorspannung kann der Wert der Motorimpedanz adaptiv angepasst und Fehler verringert werden. Außerdem kann eine temperatur- und lastabhängige motorspezifische Größe der Motorgleichung nach jedem Kommutierungsvorgang neu bestimmt und so für die folgende Extrapolation der Einfluss von Temperatur und Last auf die Motorgleichung berücksichtigt werden. Sollte die Arbeitsdauer des Motors relativ kurz sein, so kann die motorspezifische Größe auch über die gesamte Arbeitsdauer auf dem fest vorgegebenen Wert bleiben, da insbesondere die thermische Beeinflussung demgegenüber sehr viel langsamer und schwächer wirkt.

Im Folgenden wird die Erfindung anhand von zeichnerisch dargestellten Ausführungsbeispielen näher erläutert.

Dabei zeigen

Fig. 1    einen ersten Spannungsverlauf eines Welligkeitsanteils am Antriebsstrom eines Elektromotors,

Fig. 2    einen zweiten Spannungsverlauf eines Welligkeitsanteils am Antriebstrom eines Elektromotors,

Fig. 3    einen dritten Spannungsverlauf eines Welligkeitsanteils am Antriebsstrom eines Elektromotors,

Fig. 4    eine schematische Darstellung eines Kommutators eines Elektromotors,

Fig. 5    ein Ausgangssignal des Hochpasses,

Fig. 6    ein Ausgangssignal eines Schwellwertschalters, und

Fig. 7    einen Schaltkreisausschnitt einer Steuerungseinheit.

Steuerungsvorrichtungen von Verstelleinrichtung in Kraftfahrzeugen benötigen für eine optimale Steuerung eine möglichst genaue Positionsbestimmung des zu verstellenden Teils, beispielsweise einer Fensterscheibe eines Kraftfahrzeugfensterhebers. Üblicherweise werden zur Positionsbestimmung Positionsmesssysteme verwendet, die aus der Antriebsbewegung eines Elektromotors der Verstelleinrichtung die aktuelle Position berechnen. Hierzu werden beispielsweise optische Sensoren oder Hallsensoren verwendet, die die Antriebsbewegung sensieren.

Zudem weisen mechanisch kommutierte Elektromotoren eine von der Kommutierung abhängige Welligkeit des Antriebsstromes auf, die zur Positionsbestimmung genutzt werden kann. Dabei ist die Anzahl der Welligkeitssignale abhängig von der Anzahl von mit dem Kommutator verbundenen Lamellen des Elektromotors. Eine Welligkeit entspricht dabei einem bestimmten Drehwinkel. Zur Bestimmung der Position können die erkannten Welligkeiten beispielsweise gezählt werden. Derartige Positionsbestimmungsverfahren unterliegen einer Fehlerwahrscheinlichkeit, da Welligkeiten falsch oder nicht erkannt werden, insbesondere wenn der Antrieb beschleunigt oder abbremst. Auch im Ruhezustand können fehlerhafte Welligkeiten auftreten, wenn beispielsweise auf die Verstellvorrichtung ein Schlag wirkt. Die durch Zählung bestimmte Position kann daher gegenüber der realen Position verschoben sein. Demzufolge kann die bestimmte Position mit einem Positionsfehler behaftet sein.

Um diesen Positionsfehler zu korrigieren wird zusätzlich zu der Zählung der Welligkeiten eine Referenzcharakteristik von in Reihenfolge auftretender Welligkeitssignale ausgewertet. Diese Referenzcharakteristik $Ch_{ref}$ ist einer Referenzposition zugeordnet, so dass die bestimmte Position in Abhängigkeit von der Referenzcharakteristik $Ch_{ref}$ und der Referenzposition korrigiert werden kann, wie im folgenden erläutert wird.

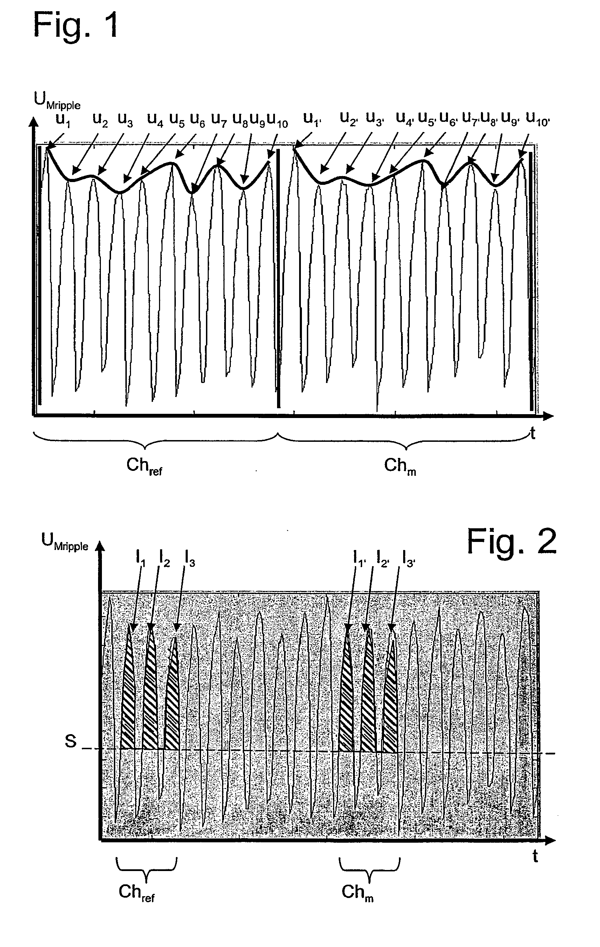

In Figur 1 ist ein erster Spannungsverlauf $U_{Mripple}$ eines Welligkeitsanteils am Antriebsstrom eines Elektromotors dargestellt. Der Spannungsverlauf wird an einem Messwiderstand gewonnen, durch den der Motorstrom oder ein Teil des Motorstromes fließt. Der Spannungsabfall über diesen Messwiderstand ist in Figur 1 über die Zeit t aufgetragen dargestellt. Der Gleichanteil des Motorstromsignals ist zur Verbesserung der Übersichtlichkeit in Figur 1 nicht dargestellt.

In dem dargestellten Ausführungsbeispiel der Figur 1 werden die Werte und die Reihenfolge der Spitzenspannungswerte U1 bis U10 bestimmt, die jeweils einer Lamelle eines mechanisch kommutierten Elektromotors zugeordnet sind. Die zeitliche Abfolge der Spitzenspannungswerte U1 bis U10 bildet einen charakteristischen Verlauf, der als Referenzcharakteristik $Ch_{ref}$ bezeichnet werden kann. Die Länge dieser Referenzcharakteristik $Ch_{ref}$ ist in diesem Ausführungsbeispiel einer vollen Motorumdrehung zuzuordnen. In Figur 1 ist eine Referenzcharakteristik $Ch_{ref}$ mit den Spitzenspannungswerten U1 bis U10 und eine Messcharakteristik $Ch_m$ mit den Spitzenspannungswerten U1' bis U10' dargestellt, die zur vereinfachten Darstellung unmittelbar aufeinander folgen.

Die Länge sowohl der Referenzcharakteristik $Ch_{ref}$ als auch der Messcharakteristik $Ch_m$ entspricht dabei einer vollen Motorumdrehung, die über die Mechanik wiederum einer Verstellwegstrecke des zu verstellenden Teils der Verstelleinrichtung zugeordnet ist. Alternativ können auch Charakteristika für einen Teil der Motorumdrehung, beispielsweise eine halbe Motorumdrehung bestimmt werden. Die Spitzenspannungswerte U1 bis U10 beziehungsweise U1' bis U10' werden vorzugsweise bestimmt, indem diese Welligkeit $U_{Mripple}$ mittels einer Analog-Digital-Umsetzung abgetastet und in einen Rechenwert gewandelt und ausgewertet wird.

Zur Korrektur wird die Messcharakteristik $Ch_m$ mit den Spitzenspannungswerten U1' bis U10' mit der Referenzcharakteristik $Ch_{ref}$ mit den Spitzenspannungswerten U1 bis U10 verglichen. Dieser Vergleich erfolgt vorzugsweise mittels einer Kreuzkorrelation. Dabei werden entweder alle Spannungswerte U1 bis U10 und U1' bis U10' miteinander kreuzkorreliert oder es werden Gruppen von Spitzenspannungswerten, beispielsweise U1, U3, U5, U7, U9 und U2, U4, U6, U8, U10 zusammengefasst und nacheinander mit den entsprechenden Spitzenspannungswerten U1' bis U10' der Messcharakteristik $Ch_m$ kreuzkorreliert. Dies kann die Kreuzkorrelation vereinfachen und benötigt daher weniger Rechenleistung.

Alternativ zum Vergleich der Spitzenspannungswerte U1 bis U10 mit U1' bis U10' werden Verhältnisse der Spitzenspannungswerte U1/U2, U2/U5 usw. der Referenzcharakteristik $Ch_{ref}$ mit Verhältnissen U1'/U2', U2'/U5' usw. der Messcharakteristik $Ch_m$ verglichen. Dabei ist es nicht erforderlich, dass die Spitzenspannungswerte U1 bis U10 aufeinander folgen.

Neben der auch in diesem Fall möglichen Verwendung der Kreuzkorrelation ist ein Vergleich auch mittels eines Einzelvergleichs der Werte möglich. Dabei werden der Reihe nach die aktuellen Werte U1' bis U10' mit den Referenzwerten U1 bis U10 verglichen. Die Übereinstimmung der Werte muss dabei innerhalb eines Bereiches liegen. Beispielsweise dürfen die Werte nicht mehr als 5% voneinander abweichen. Demzufolge wäre die erste Abfrage x1*U1<U1'<x2*U1 mit x1=0.95 und x2=1.05. Nachfolgend wird die Überprüfung auf gleicher Weise mit U2 und U2' fortgesetzt. Liegt eine der Spannungen U1' bis U10' außerhalb dieses Toleranzbereiches von 5% besteht keine Übereinstimmung mit der Referenzcharakteristik $Ch_{ref}$. Liegen alle Spannungswerte U1' bis U10' innerhalb dieses Toleranzbereiches gilt das Referenzcharakteristik $Ch_{ref}$, die auch als Muster bezeichnet werden kann, als erkannt.

In Figur 2 ist ebenfalls ein zeitlicher Ausschnitt eines Spannungsverlaufs $U_{Mripple}$ einer Welligkeit eines gemessenen Antriebsstromes dargestellt. Im Gegensatz zum Ausführungsbeispiel der Figur 1 ist in Figur 2 die Referenzcharakteristik $Ch_{ref}$ durch drei Integralwerte I1, I2 und I3 definiert, die durch die Fläche zwischen einem Schwellwert S oder Offset S und dem Verlauf der Welligkeitsspannung $U_{Mripple}$ bestimmt werden. Überschreitet der Verlauf der Welligkeitsspannung $U_{Mripple}$ den Offset S wird integriert, unterschreitet der Verlauf der Welligkeitsspannung $U_{Mripple}$ den Offset wird der Integralwert I1, I2 oder I3 usw. zurückgesetzt. Gleiches gilt für die Integration für die Messcharakteristik $Ch_m$

mit den Integralwerten I1', I2' und I3'.

Für den folgenden Vergleich können wiederum die Integralwerte I1, I2 und I3 mit den Integralwerten I1', I2' und I3' kreuzkorreliert werden. Alternativ oder in Kombination zu den Integralwerten werden vorteilhafterweise die Verhältnisse beispielsweise 11 zu I2 und I2 zu I3 der Integralwerte der Referenzcharakteristik $Ch_{ref}$ mit den zugehörigen Verhältnissen I1' zu I2' und I2' zu I3' der Integralwerte der Messcharakteristik $Ch_m$ kreuzkorreliert.

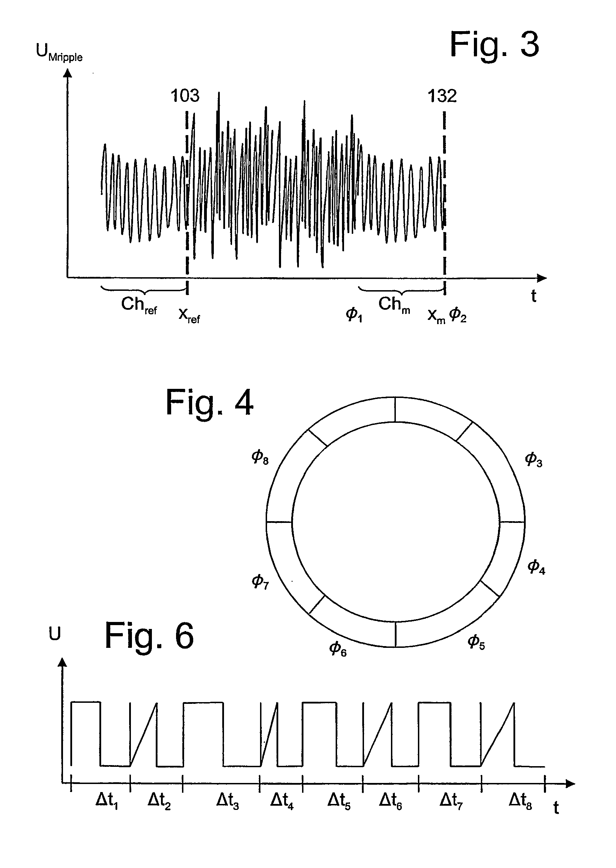

Auch Figur 3 zeigt einen zeitlichen Ausschnitt eines Spannungsverlaufs $U_{Mripple}$ einer Welligkeit eines gemessenen Antriebsstromes über die Zeit t. In Figur 3 soll unabhängig von der Definition der Charakteristiken $Ch_{ref}$ und $Ch_m$, wie diese in den den Ausführungsbeispielen der Figuren 1 und 2 dargelegt wurden, die Korrektur der bestimmten Position $x_m$ erläutert werden. Zunächst ist einer Referenzposition $x_{ref}$, die in diesem Ausführungsbeispiel den Zählwert 103 hat, eine Referenzcharakteristik $Ch_{ref}$ zugeordnet worden. Die nachfolgend gemessenen Werte des zeitlichen Verlaufs der Messspannung $U_{Mripple}$ werden fortlaufend mit dieser Referenzcharakteristik $Ch_{ref}$ verglichen. In dem beispielhaften Spannungsverlauf in Figur 3 treten direkt nach der Referenzcharakteristik $Ch_{ref}$ Störungen auf, die ein positives Vergleichsergebnis verhindern, so dass eine Zuordnung zur Referenzcharakteristik $Ch_{ref}$ nicht erfolgt.

Eine Zuordnung zu der Referenzcharakteristik $Ch_{ref}$ ist erst wieder an der bestimmten Position $x_m$ 132 möglich. An dieser Position $x_m$ kann die Messcharakteristik $Ch_m$ der Referenzcharakteristik $Ch_{ref}$ zugeordnet werden. Im folgenden wird nun überprüft, ob die Position $x_m$ = 132 korrigiert werden muss. Die Referenzcharakteristik $Ch_{ref}$ entspricht im Ausführungsbeispiel der Figur 3 einer vollen Motorumdrehung, der insgesamt 10 zur Positionsbestimmung zählbare Spannungssignale der Welligkeit des Antriebsstromes zugeordnet sind. Da mit Ablauf der Messcharakteristik $Ch_m$ wiederum eine volle Motorumdrehung beendet ist, kann für das Ausführungsbeispiel der Figur 3 der Abstand zwischen der bestimmten Position $x_m$ und der Referenzposition $x_{ref}$ nur ein Vielfaches der Länge der Referenzcharakteristik $x_{ref}$ betragen. Die Länge der Referenzcharakteristik $x_{ref}$ beträgt, wie bereits zuvor erwähnt, 10 zählbare Spannungssignale. Werden nun von der bestimmten Position $x_m$ = 132 drei mal die Länge 10 der Referenzcharakteristik $Ch_{ref}$ abgezogen, erhält man den Wert 102, der um einen Zählwert von der Referenzposition $x_{ref}$ = 103 abweicht. Zur Korrektur der bestimmten Position $x_m$ wird nachfolgend dessen Wert daher um 1 auf 133 erhöht.

Eine alternative Berechnung ist möglich durch:

$$k = (x_m - x_{ref}) \bmod 10$$

Für den Fall das $0 < k < 5$ erfolgt eine Korrektur der aktuellen Position $x_m$ um den Zähler k in eine bestimmte Korrekturrichtung. Dagegen erfolgt im Fall $5 < k < 10$ eine Korrektur um 10-k in die entgegen gesetzte Korrekturrichtung.

Dieses Korrekturverfahren wird vorteilhaft mit weiteren Korrekturverfahren kombiniert. Vorzugsweise wird die bestimmte Position $x_m$ korrigiert, wenn eine detektierbare Position innerhalb des Verstellweges, beispielsweise ein mechanischer Anschlag, erkannt wird. Vorteilhafterweise wird zudem die Referenzposition $x_{ref}$ korrigiert. Eine, die Erfindung weiterbildende Korrektur ist kombinierbar möglich, wenn ein Teil der Mechanik der Verstelleinrichtung, insbesondere ein Getriebe, ein über den Verstellweg in bestimmten Abständen detektierbares Charakteristikum aufweist. Dieses Charakteristikum ist beispielsweise eine Schwergängigkeit oder Leichtgängigkeit im Bereich eines Zahnelementes eines Getriebezahnrades.

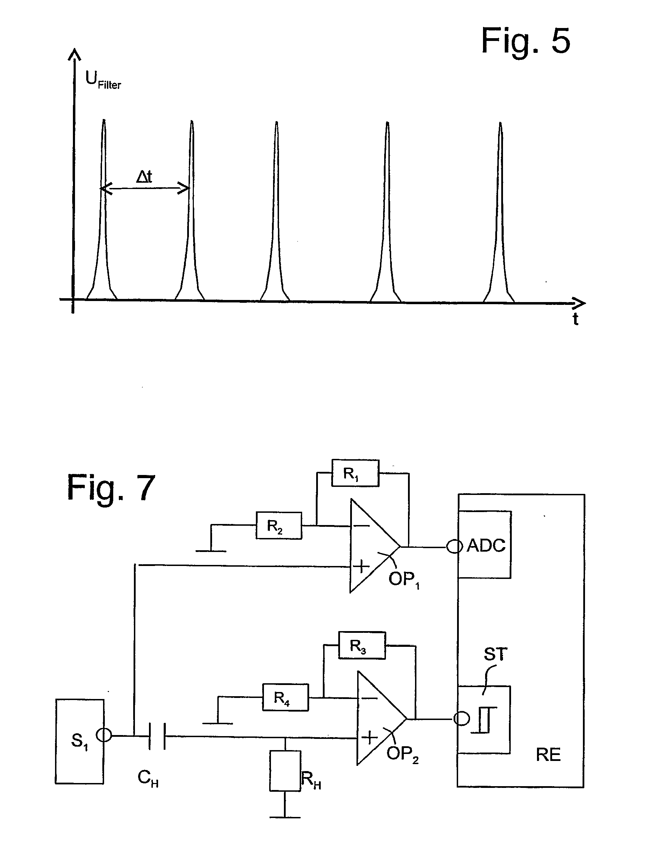

Figur 7 zeigt einen Teil eines Schaltkreises einer Steuerungsvorrichtung. Die Bestimmung der Referenzcharakteristik $Ch_{ref}$ und der Messcharakteristik $Ch_m$ erfolgt abweichend von der Bestimmung in den Figuren 1 und 2. Die Ermittlung der Referenzcharakteristik $Ch_{ref}$ und der Messcharakteristik $Ch_m$ mittels des Schaltkreises der Figur 7, wird zu den Figuren 4 und 5 näher erläutert.

Der dargestellte Schaltkreis in Figur 7 weist eine Recheneinheit RE auf, die beispielsweise ein Mikrocontroller oder ein Anwenderspezifischer Schaltkreis (ASIC) ist. In diese Recheneinheit integriert sind ein Analog-Digital-Umsetzer ADC und ein Schmitt-Trigger ST, die analoge Eingangssignale der Recheneinheit RE in digitale Werte umsetzen. Alternativ zum Schmitt-Trigger ST kann auch ein unterbrechungsfähiger (interrupt) Timereingang eines Mikrocontrollers verwendet werden. Beide Eingänge sind über weitere Bauelemente mit einem Stromsensor S1 verbunden, der ein vom Motorstrom abhängiges Spannungssignal abgibt. Das Spannungssignal gelangt zum einen über den aus dem Kondensator $C_H$ und dem Widerstand $R_H$ gebildeten Hochpass auf den als Inverter beschalteten Operationsverstärker $OP_2$ an den Schmitt-Trigger-Eingang ST der Recheneinheit. Zum anderen gelangt das Spannungssignal über den ebenfalls als Inverter beschalteten Operationsverstärker $OP_1$ an den Eingang des Analog-Digital-Umsetzers ADC der Recheneinheit RE.

Der Hochpass $C_H$, $R_H$ wirkt als Differenzierer, der durch die Welligkeit bedingte Spannungsänderungen passieren lässt und den sich langsam ändernden Gleichanteil am Spannungssignal ausfiltert. Das nun ausschließlich Wechselspannungsanteile enthaltende Signal $U_{Filter}$ ist in Figur 5 schematisch dargestellt. Zur Bestimmung der Messcharakteristik $Ch_m$ wird je eine Zeitdifferenz $\Delta t$ zwischen den dargestellten Impulsen ausgemessen.

# EP 1 763 915 B1

Dieses Ausgangssignal $U_{Filter}$ des Differenzierers $C_H$, $R_H$ wird durch den Schmitt-Trigger ST in Rechteckpulse gewandelt, die in Figur 6 schematisch dargestellt sind. In Figur 6 sind 8 Rechteckimpulse dargestellt. Jedem Rechteckimpuls ist je ein Zeitintervall $\Delta t_1$ bis $\Delta t_8$ zugeordnet. Die Zeitintervalle $\Delta t_1$ bis $\Delta t_8$ weisen dabei unterschiedliche Längen auf. Ein Zeitintervall $\Delta t_1$ bis $\Delta t_8$ reicht im Ausführungsbeispiel der Figur 6 von einer steigenden Flanke bis zur nächst folgenden steigenden Flanke des nächsten Impulses. Wird ein unterbrechungsfähiger Timereingang des Mikrocontrollers verwendet reicht das Zeitintervall $\Delta t_1$ bis $\Delta t_8$ von einer Unterbrechung (interrupt) bis zur nächsten. Die Zeitintervalle $\Delta t_1$ bis $\Delta t_8$ sind in Reihenfolge auftretende Signale, die wiederum eine Referenzcharakteristik $Ch_{ref}$ bilden.

Figur 4 ist die schematische Darstellung eines Kommutators eines Elektromotors, auf dem die in Figur 4 nicht dargestellten Bürsten schleifen. Die Metallkontakte des Kommutators, die mit den Bürsten zusammen den temporären elektrischen Kontakt für die Kommutierung bilden, weisen dabei unterschiedliche Winkelbereiche $\Phi_1$ bis $\Phi_8$ des Umfanges des Kommutators auf. Zur besseren Sichtbarkeit weichen die Winkelbereiche $\Phi_1$ bis $\Phi_8$ deutlich voneinander ab. Für die gewünschte Funktionalität einer entsprechenden Charakteristik ist jedoch eine Wickelabweichung zwischen $\Phi_1$ bis $\Phi_8$ von weniger als 1° ausreichend. Die Winkelabweichungen $\Phi_1$ bis $\Phi_8$ der Figur 4 korrespondieren zu den Zeitintervallen $\Delta t_1$ bis $\Delta t_8$ der Figur 6. Zur Korrektur wird wiederum wie in der Beschreibung zu Figur 3 verfahren, mit dem Unterschied, dass die Charakteristiken $Ch_{ref}$ und $Ch_m$ aus den Zeitintervallen $\Delta t_1$ bis $\Delta t_8$ oder aus Verhältnissen der Zeitintervalle $\Delta t_1$ bis $\Delta t_8$ bestimmt werden.

Für eine Ermittlung der Charakteristiken $Ch_{ref}$ und $Ch_m$ sind fertigungstoleranzbedingte Unterschiede zwischen den Metallkontakten des Kommutators oder zwischen den Lamellen ausreichend. Um die Charakteristik weiter zu verbessern, ist zudem vorteilhaft den Elektromotor derart auszubilden, insbesondere ist die Geometrie der Metallkontakte des Kommutators derart herzustellen, dass die Charakteristika $Ch_{ref}$ und $Ch_m$ signifikant stärker ausgeprägt sind, um eine Auswertung und Korrektur der bestimmten Position $x_m$ zu verbessern.

Bezugszeichenliste

| | |
|---|---|
| $U_1$, $U_2$, $U_3$, $U_4$, $U_5$, $U_6$, $U_7$, $U_8$, $U_9$, $U_{10}$, $U_{1'}$, $U_{2'}$, $U_{3'}$, $U_{4'}$, $U_{5'}$, $U_{6'}$, $U_{7'}$, $U_{8'}$, $U_{9'}$, $U_{10'}$ | Spannungswert |
| $I_1$, $I_2$, $I_3$, $I1'$, $I_{2'}$, $I_{3'}$ | Integralwert |
| $\Phi_1$, $\Phi_2$, $\Phi_3$, $\Phi_4$, $\Phi_5$, $\Phi_6$, $\Phi_7$, $\Phi_8$, | Winkel |
| $\Delta t_1, \Delta t_2, \Delta t_3, \Delta t_4, \Delta t_5, \Delta t_6, \Delta t_7, \Delta t_8, \Delta t$ | Zeitintervall |
| 103, 132 | Zählwert |
| $U_{Mripple}$ | Spannung der Welligkeit eines Kommutatormotorstromes |
| t | Zeit |
| S | Schwellwert, Offset |
| $Ch_{ref}$ | Referenzcharakteristik |
| $Ch_m$ | Messcharakteristik |
| $X_{ref}$ | Referenzposition |
| $x_m$ | bestimmte Position |
| $R_1$, $R_2$, $R_3$, $R_4$, $R_H$ | Widerstand |
| $C_H$ | Kondensator |
| $OP_1$, $OP_2$ | Operationsverstärker, Komparator |
| $S_1$ | Stromsensor, Shunt-Widerstand |
| RE | Recheneinheit, Mikrocontroller, ASIC |
| ADC | Analog-Digital-Umsetzer |
| ST | Schmitt-Trigger, Fensterkomparator |
| $U_{Filter}$ | Ausgangsspannung eines Differenzierers |

**Patentansprüche**

**1.** Verfahren zur Steuerung einer Verstelleinrichtung eines Kraftfahrzeugs, wobei

- die Steuerung in Abhängigkeit von einer Position ($x_m$) erfolgt, die aus einer Welligkeit eines Motorstromes der

7

Verstelleinrichtung bestimmt wird, indem

- eine Referenzcharakteristik ($Ch_{ref}$) von in Reihenfolge auftretender Signale ($U_1$ bis $U_{10}$, $I_1$ bis $I_3$, $\Delta t_1$ bis $\Delta t_8$) der Welligkeit einer Referenzposition ($x_{ref}$) zugeordnet wird, **dadurch gekennzeichnet, dass**
- die bestimmte Position ($x_m$) in Abhängigkeit von der Referenzcharakteristik ($Ch_{ref}$) und der Referenzposition ($x_{ref}$) korrigiert wird.

2. Verfahren nach Anspruch 1,
   **dadurch gekennzeichnet,**
   **dass** eine aktuelle Messcharakteristik ($Ch_m$) und die Referenzcharakteristik ($Ch_{ref}$) verglichen werden, und die Korrektur erfolgt, wenn die aktuelle Messcharakteristik ($Ch_m$) und die Referenz-charakteristik ($Ch_{ref}$) mittels des Vergleiches einander zugeordnet werden können.

3. Verfahren nach Anspruch 2,
   **dadurch gekennzeichnet,**
   **dass** zum Vergleich der Messcharakteristik ($Ch_m$) und der Referenzcharakteristik ($Ch_{ref}$) diese kreuzkorreliert werden.

4. Verfahren nach einem der Ansprüche 2 oder 3,
   **dadurch gekennzeichnet,**
   **dass** die Messcharakteristik ($Ch_m$) und die Referenzcharakteristik ($Ch_{ref}$) einander zugeordnet werden können, wenn ein Wert von Übereinstimmungen zwischen der Messcharakteristik ($Ch_m$) und der Referenzcharakteristik ($Ch_{ref}$) einen bestimmten Schwellwert überschreitet.

5. Verfahren nach einem der vorhergehenden Ansprüche,
   **dadurch gekennzeichnet,**
   **dass** die Referenzcharakteristik ($Ch_{ref}$) fortlaufend aktualisiert wird.

6. Verfahren nach Anspruch 5,
   **dadurch gekennzeichnet,**
   **dass** zur Aktualisierung zugeordnete Messcharakteristiken ($Ch_m$) mit der Referenzcharakteristik ($Ch_{ref}$) abgeglichen werden.

7. Verfahren nach einem der vorhergehenden Ansprüche,
   **dadurch gekennzeichnet,**
   **dass** die Referenzcharakteristik ($Ch_{ref}$) eine Anzahl von Spannungswerten und/oder Stromwerten, insbesondere von Spitzenstromwerten ($U_1$ bis $U_{10}$) der in Reihenfolge auftretenden Signale und/oder von transformierten Signalen aufweist.

8. Verfahren nach einem der vorhergehenden Ansprüche,
   **dadurch gekennzeichnet,**
   **dass** die Referenzcharakteristik ($Ch_{ref}$) eine Anzahl von Integralwerten ($I_1$ bis $I_3$) der in Reihenfolge auftretenden Signale aufweist.

9. Verfahren nach einem der vorhergehenden Ansprüche,
   **dadurch gekennzeichnet,**
   **dass** die Referenzcharakteristik ($Ch_{ref}$) eine Anzahl von Zeitintervallen ($\Delta t_1$ bis $\Delta t_8$) der in Reihenfolge auftretenden Signale aufweist.

10. Verfahren nach einem der vorhergehenden Ansprüche,
    **dadurch gekennzeichnet,**
    **dass** die Referenzcharakteristik ($Ch_{ref}$) eine Anzahl von zu Winkelsegmentbreiten zugeordneten, in Reihenfolge auftretende Signale aufweist, die durch eine Vollumdrehung verifiziert werden.

11. Verfahren nach zumindest einem der Ansprüche 7 bis 9,
    **dadurch gekennzeichnet,**
    **dass** die Referenzcharakteristik ($Ch_{ref}$) Verhältnisse von Spannungswerten ($U_1$ bis $U_{10}$) und/oder Stromwerten und/oder Integralwerten ($I_1$ bis $I_3$) und/oder Zeitintervallen ($\Delta t_1$ bis $\Delta t_8$) der in Reihenfolge auftretenden Signale aufweist.

**12.** Verfahren nach einem der vorhergehenden Ansprüche,
**dadurch gekennzeichnet,**
**dass** zur Korrektur der aktuell bestimmte Positionswert ($x_m$) in einem Register überschrieben wird.

**13.** Verfahren nach einem der vorhergehenden Ansprüche,
**dadurch gekennzeichnet,**
**dass** die bestimmte Position ($x_m$) in Abhängigkeit von der Länge der Charakteristik korrigiert wird.

**14.** Verfahren nach Anspruch 13,
**dadurch gekennzeichnet,**
**dass** zur Korrektur die Distanz zwischen der bestimmten Position ($x_m$) und der Referenzposition ($Ch_{ref}$) um ein Vielfaches der Länge der Charakteristik verringert wird, und
die bestimmte Position ($x_m$) um die verbleibende Differenz verschoben wird.

**15.** Verfahren nach einem der vorhergehenden Ansprüche,
**dadurch gekennzeichnet,**
**dass** die Korrektur nur bei positiven Ergebnis einer Plausibilitätsprüfung von zumindest der bestimmten Position ($x_m$), der Referenzposition ($x_{ref}$) und der Länge der Charakteristik erfolgt.

**16.** Verfahren zur Steuerung einer Verstelleinrichtung eines Kraftfahrzeugs, wobei

- die Steuerung in Abhängigkeit von einer Position ($x_m$) erfolgt, die aus einem von einer Motorbewegung abhängigen Sensorsignal der Verstelleinrichtung bestimmt wird, indem
- eine Referenzcharakteristik ($Ch_{ref}$) von in Reihenfolge auftretender Sensorsignale einer Referenzposition ($x_{ref}$) zugeordnet wird, und
- die bestimmte Position ($x_m$) in Abhängigkeit von der Referenzcharakteristik ($Ch_{ref}$) und der Referenzposition ($x_{ref}$) korrigiert wird.

**17.** Verfahren nach Anspruch 16,
**gekennzeichnet durch**
ein Merkmal zumindest eines kennzeichnenden Teils der Ansprüche 2 bis 15.

**18.** Steuerungsvorrichtung einer Verstelleinrichtung eines Kraftfahrzeugs, mit
einem Sensor, insbesondere einem Stromsensor ($S_1$) zur Generation eines von einer Motorbewegung eines Motors der Verstelleinrichtung abhängigen Signals ($U_1$ bis $U_{10}$, $I_1$ bis $I_3$, $\Delta t_1$ bis $\Delta t_8$),
einem Leistungstreiber zur Steuerung eines Motorstromes, und
einer Recheneinheit (RE), die ausgebildet und eingerichtet ist

- eine Position ($x_m$) aus dem Sensorsignal ($U_1$ bis $U_{10}$, $I_1$ bis $I_3$, $\Delta t_1$ bis $\Delta t_8$), insbesondere der Welligkeit des Motorstromes zu bestimmen,
- eine Referenzcharakteristik ($Ch_{ref}$) von in Reihenfolge auftretender Signale ($U_1$ bis $U_{10}$, $I_1$ bis $I_3$, $\Delta t_1$ bis $\Delta t_8$) des Sensors, insbesondere der Welligkeit einer Referenzposition ($x_{ref}$) zuzuordnen,
- die bestimmte Position ($x_m$) in Abhängigkeit von der Referenzcharakteristik ($Ch_{ref}$) und der Referenzposition ($x_{ref}$) zu korrigieren und
- den Motorstrom in Abhängigkeit von der korrigierten Position zu steuern.

**19.** Steuerungsvorrichtung nach Anspruch 18
**gekennzeichnet durch**
ein Differenzierglied, insbesondere einen Hochpass ($R_H$, $C_H$) oder einen Bandpass, das ausgelegt ist den Gleichanteil des Sensorsignals auszufiltern, um insbesondere eine mit der Referenzcharakteristik ($Ch_{ref}$) zu vergleichende Messcharakteristik ($Ch_m$) aus dem gefilterten Signal ($U_{Mripple}$) zu bestimmen.

**20.** Steuerungsvorrichtung nach Anspruch 19,
**dadurch gekennzeichnet,**
**dass** der Sensor ($S_1$) mit einem Analog-Digital-Umsetzer (ADC) derart verbunden ist, dass das ungefilterte Sensorsignal, insbesondere dessen Gleichanteil, von der Recheneinheit (RE) auswertbar ist.

**21.** Rechner-Programm-Produkt mit auf einem maschinenlesbaren Träger gespeicherten Programmcode zur Durchführung des Verfahrens nach einem der Ansprüche 1 bis 17, wenn das Programmprodukt auf einer Recheneinheit (RE) abläuft.

**22.** Rechen-Programm mit einem Programmcode zur Durchführung des Verfahrens nach einem der Ansprüche 1 bis 17, wenn das Programmprodukt auf einer Recheneinheit (RE) abläuft.

**Claims**

**1.** Method for controlling an adjusting device in a motor vehicle, where

- the control is effected on the basis of a position ($x_m$) which is determined from a ripple in a motor current in the adjusting device, by
- associating a reference characteristic ($Ch_{ref}$) of orderly signals ($U_1$ to $U_{10}$, $I_1$ to $I_3$, $\Delta t_1$ to $\Delta t_8$) for the ripple with a reference position ($x_{ref}$),

**characterized in that**
the position found ($x_m$) is corrected on the basis of the reference characteristic ($Ch_{ref}$) and the reference position ($x_{ref}$).

**2.** Method according to claim 1,
**characterized in that**
a present measurement characteristic ($Ch_m$) and the reference characteristic ($Ch_{ref}$) are compared, and the correction is made if the present measurement characteristic ($Ch_m$) and the reference characteristic ($Ch_{ref}$) can be associated with one another by means of the comparison.

**3.** Method according to claim 2,
**characterized in that**
the measurement characteristic ($Ch_m$) and the reference characteristic ($Ch_{ref}$) are compared by cross-correlating them.

**4.** Method according to one of claims 2 and 3,
**characterized in that**
the measurement characteristic ($Ch_m$) and the reference characteristic ($Ch_{ref}$) can be associated with one another if a value for matches between the measurement characteristic ($Ch_m$) and the reference characteristic ($Ch_{ref}$) exceeds a particular threshold value.

**5.** Method according to one of the preceding claims,
**characterized in that**
the reference characteristic ($Ch_{ref}$) is continually updated.

**6.** Method according to claim 5,
**characterized in that**
updating involves associated measurement characteristics ($Ch_m$) being aligned with the reference characteristic ($Ch_{ref}$).

**7.** Method according to one of the preceding claims,
**characterized in that**
the reference characteristic ($Ch_{ref}$) has a number of voltage values and/or current values, particularly of peak current values ($U_1$ to $U_{10}$) for the orderly signals and/or of transformed signals.

**8.** Method according to one of the preceding claims,
**characterized in that**
the reference characteristic ($Ch_{ref}$) has a number of integral values ($I_1$ to $I_3$) for the orderly signals.

**9.** Method according to one of the preceding claims,
**characterized in that**
the reference characteristic ($Ch_{ref}$) has a number of time intervals ($\Delta t_1$ to $\Delta t_8$) for the orderly signals.

**10.** Method according to one of the preceding claims,
**characterized in that**
the reference characteristic ($Ch_{ref}$) has a number of orderly signals which are associated with angle segment widths and which are verified by a full revolution.

**11.** Method according to at least one of claims 7 to 9,
**characterized in that**
the reference characteristic ($Ch_{ref}$) has ratios for voltage values ($U_1$ to $U_{10}$) and/or current values and/or integral values ($I_1$ to $I_3$) and/or time intervals ($\Delta t_1$ to $\Delta t_8$) for the orderly signals.

**12.** Method according to one of the preceding claims,
**characterized in that**
the correction is made by overwriting the currently determined position value ($x_m$) in a register.

**13.** Method according to one of the preceding claims,
**characterized in that**
the position found ($x_m$) is corrected on the basis of the length of the characteristic.

**14.** Method according to claim 13,
**characterized in that**
the correction is made by reducing the distance between the position found ($x_m$) and the reference position ($Ch_{ref}$) by a multiple of the length of the characteristic, and shifting the position found ($x_m$) by the remaining difference.

**15.** Method according to one of the preceding claims,
**characterized in that**
the correction is made only in the event of a positive result from a plausibility check on at least the position found ($x_m$), the reference position ($x_{ref}$) and the length of the characteristic.

**16.** Method for controlling an adjusting device in a motor vehicle, where

- the control is effected on the basis of a position ($x_m$) which is found from a sensor signal from the adjusting device which is dependent on a motor movement by
- associating a reference characteristic ($Ch_{ref}$) of orderly sensor signals with a reference position ($x_{ref}$), and
- correcting the position found ($x_m$) on the basis of the reference characteristic ($Ch_{ref}$) and the reference position ($x_{ref}$).

**17.** Method according to claim 16,
**characterized by**
a feature from at least one characterizing part of claims 2 to 15.

**18.** Control apparatus for an adjusting device in a motor vehicle, having a sensor, particularly a current sensor ($S_1$), for generating a signal ($U_1$ to $U_{10}$, $I_1$ to $I_3$, $\Delta t1$ to $\Delta t_8$) which is dependent on a motor movement by a motor in the adjusting device,
a power driver for controlling a motor current, and
a processor (RE) which is designed and set up

- to determine a position ($x_m$) from the sensor signal ($U_1$ to $U_{10}$, $I_1$ to $I_3$, $\Delta t_1$ to $\Delta t_8$), particularly from the ripple in the motor current,
- to associate a reference characteristic ($Ch_{ref}$) of orderly signals ($U_1$ to $U_{10}$, $I_1$ to $I_3$, $\Delta t_1$ to $\Delta t_8$) from the sensor, particularly for the ripple, with a reference position ($x_{ref}$),
- to correct the position found (xm) on the basis of the reference characteristic ($Ch_{ref}$) and the reference position ($x_{ref}$), and
- to control the motor current on the basis of the corrected position.

**19.** Control apparatus according to claim 18,
**characterized by**
a differentiating element, particularly a high-pass filter (RH, CH) or a bandpass filter, which is designed to filter out the DC component of the sensor signal in order, in particular, to determine from the filtered signal ($U_{Mripple}$) a

measurement characteristic (Ch$_m$) which is to be compared with the reference characteristic (Ch$_{ref}$).

**20.** Control apparatus according to claim 19,
**characterized in that**
the sensor (S1) is connected to an analog-digital converter (ADC) such that the unfiltered sensor signal, particularly its DC component, can be evaluated by the processor (RE).

**21.** Computer program product with program codes stored on a machine-readable medium for carrying out the method according to one of claims 1 to 17 when the program product is running on a processor (RE).

**22.** Computer program with a program code for carrying out the method according to one of claims 1 to 17 when the program product is running on a processor (RE).

**Revendications**

**1.** Procédé pour assurer la commande d'un dispositif de déplacement de réglage d'un véhicule automobile, procédé

- d'après lequel la commande s'effectue en fonction d'une position (x$_m$), qui est déterminée à partir d'une ondulation d'un courant de moteur du dispositif de déplacement de réglage, en
- associant une caractéristique de référence (Ch$_{ref}$) de signaux (U$_1$ à U$_{10}$, I$_1$ à I$_3$, $\Delta t_1$ à $\Delta t_8$) de l'ondulation, qui apparaissent selon une succession ordonnée, à une position de référence (x$_{ref}$), **caractérisé en ce que**
- la position (x$_m$) déterminée est corrigée en fonction de la caractéristique de référence (Ch$_{ref}$) et de la position de référence (x$_{ref}$).

**2.** Procédé selon la revendication 1,
**caractérisé**
**en ce que** l'on compare une caractéristique mesurée actuelle (Ch$_m$) et la caractéristique de référence (Ch$_{ref}$) et la correction est effectuée lorsque la caractéristique mesurée actuelle (Ch$_m$) et la caractéristique de référence (Ch$_{ref}$) peuvent être associées mutuellement au moyen de la comparaison.

**3.** Procédé selon la revendication 2,
**caractérisé**
**en ce que** pour la comparaison de la caractéristique mesurée (Ch$_m$) et de la caractéristique de référence (Ch$_{ref}$), celles-ci sont corrélées de manière croisée.

**4.** Procédé selon l'une des revendications 2 ou 3,
**caractérisé**
**en ce que** la caractéristique mesurée (Ch$_m$) et la caractéristique de référence (Ch$_{ref}$) peuvent être associées mutuellement, lorsqu'une valeur de concordances entre la caractéristique mesurée (Ch$_m$) et la caractéristique de référence (Ch$_{ref}$) dépasse une valeur de seuil déterminée.

**5.** Procédé selon l'une des revendications précédentes,
**caractérisé**
**en ce que** la caractéristique de référence (Ch$_{ref}$) est actualisée en continu.

**6.** Procédé selon la revendication 5,
**caractérisé**
**en ce que** des caractéristiques mesurées (Ch$_m$) affectées à l'actualisation sont rapprochées de ou comparées à la caractéristique de référence (Ch$_{ref}$).

**7.** Procédé selon l'une des revendications précédentes,
**caractérisé**
**en ce que** la caractéristique de référence (Ch$_{ref}$) présente un certain nombre de valeurs de tension et/ou de valeurs de courant, notamment de valeurs de courant de crête (U$_1$ à U$_{10}$) des signaux apparaissant selon une succession ordonnée, et/ou de signaux transformés.

**8.** Procédé selon l'une des revendications précédentes,

**caractérisé**

**en ce que** la caractéristique de référence ($Ch_{ref}$) présente un certain nombre de valeurs d'intégrale ($I_1$ à $I_3$) des signaux apparaissant selon une succession ordonnée.

9. Procédé selon l'une des revendications précédentes,
**caractérisé**
**en ce que** la caractéristique de référence ($Ch_{ref}$) présente un certain nombre d'intervalles de temps ($\Delta t_1$ à $\Delta t_8$) des signaux apparaissant selon une succession ordonnée.

10. Procédé selon l'une des revendications précédentes,
**caractérisé**
**en ce que** la caractéristique de référence ($Ch_{ref}$) présente un certain nombre de signaux apparaissant selon une succession ordonnée et associés à des largeurs de secteurs angulaires, qui sont vérifiés par un tour de rotation complet.

11. Procédé selon l'une au moins des revendications 7 à 9,
**caractérisé**
**en ce que** la caractéristique de référence ($Ch_{ref}$) présente des rapports de valeurs de tension ($U_1$ à $U_{10}$) et/ou de valeurs de courant et/ou de valeurs d'intégrales ($I_1$ à $I_3$) et/ou d'intervalles de temps ($\Delta t_1$ à $\Delta t_8$) des signaux apparaissant selon une succession ordonnée.

12. Procédé selon l'une des revendications précédentes,
**caractérisé**
**en ce que** pour la correction, la valeur de position ($x_m$) déterminée actuellement est écrasée dans un registre.

13. Procédé selon l'une des revendications précédentes,
**caractérisé**
**en ce que** la position ($x_m$) déterminée est corrigée en fonction de la longueur de la caractéristique.

14. Procédé selon la revendication 13,
**caractérisé**
**en ce que** pour la correction, on réduit la distance entre la position ($x_m$) déterminée et la position de référence ($Ch_{ref}$), d'un multiple de la longueur de la caractéristique, et
l'on décale la position ($x_m$) déterminée de la différence résiduelle.

15. Procédé selon l'une des revendications précédentes,
**caractérisé**
**en ce que** la correction n'est effectuée que dans le cas d'un résultat positif d'un test de plausibilité d'au moins la position ($x_m$) déterminée, de la position de référence ($x_{ref}$) et de la longueur de la caractéristique.

16. Procédé pour assurer la commande d'un dispositif de déplacement de réglage d'un véhicule automobile, procédé

   - d'après lequel la commande s'effectue en fonction d'une position ($x_m$), qui est déterminée à partir d'un signal de capteur dépendant d'un mouvement de moteur, du dispositif de déplacement de réglage, en
   - associant une caractéristique de référence ($Ch_{ref}$) de signaux de capteur, qui apparaissent selon une succession ordonnée, à une position de référence ($x_{ref}$) et
   - en corrigeant la position ($x_m$) déterminée en fonction de la caractéristique de référence ($Ch_{ref}$) et de la position de référence ($x_{ref}$).

17. Procédé selon la revendication 16,
**caractérisé**
**par** une particularité d'au moins une partie caractérisante des revendications 2 à 15.

18. Dispositif de commande d'un dispositif de déplacement de réglage d'un véhicule automobile, comprenant
un capteur, notamment un capteur de courant ($S_1$) destiné à générer un signal ($U_1$ à $U_{10}$, $I_1$ à $I_3$, $\Delta t_1$ à $\Delta t_8$) fonction d'un mouvement de moteur d'un moteur du dispositif de déplacement de réglage,
un circuit d'attaque de puissance pour commander un courant de moteur, et
une unité de calcul (RE), qui est réalisée et configurée pour

- déterminer une position ($x_m$) à partir du signal de capteur ($U_1$ à $U_{10}$, $I_1$ à $I_3$, $\Delta t_1$ à $\Delta t_8$), notamment de l'ondulation du courant de moteur,
- associer une caractéristique de référence ($Ch_{ref}$) de signaux ($U_1$ à $U_{10}$, $I_1$ à $I_3$, $\Delta t_1$ à $\Delta t_8$) du capteur, apparaissant selon une succession ordonnée, notamment l'ondulation, à une position de référence ($x_{ref}$)
- corriger la position ($x_m$) déterminée en fonction de la caractéristique de référence ($Ch_{ref}$) et de la position de référence ($x_{ref}$), et
- commander le courant de moteur en fonction de la position corrigée.

**19.** Dispositif de commande selon la revendication 18,
**caractérisé**
**par** un organe de différenciation, notamment un passe-haut ($R_H$, $C_H$) ou un passe-bande, qui est conçu pour filtrer la fraction continue du signal de capteur, notamment en vue de déterminer à partir du signal filtré ($U_{Mripple}$), une caractéristique mesurée ($Ch_m$) à comparer à la caractéristique de référence ($Ch_{ref}$).

**20.** Dispositif de commande selon la revendication 19,
**caractérisé**
**en ce que** le capteur ($S_1$) est relié à un convertisseur analogique-numérique (ADC) de manière telle, que le signal de capteur non filtré, notamment sa fraction continue, puisse être traité et exploité par l'unité de calcul (RE).

**21.** Produit de programme de calculateur comprenant un code de programme mémorisé sur un support lisible par machine, pour la mise en oeuvre du procédé selon l'une des revendications 1 à 17, lorsque le produit de programme est exécuté dans une unité de calcul (RE).

**22.** Programme de calcul avec un code de programme pour la mise en oeuvre du procédé selon l'une des revendications 1 à 17, lorsque le produit de programme est exécuté dans une unité de calcul (RE).

Fig. 1

Fig. 2

# Fig. 3

# Fig. 4

# Fig. 6

Fig. 5

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3043118 A1
- EP 0359853 B1
- DE 4315637 A1
- DE 19711979 A1
- DE 19802478 A1
- WO 9850658 A
- US 2003122515 A
- US 6548974 B